# EUROPÄISCHE PATENTSCHRIFT

(11) **EP 1 282 724 B1**
(45) Veröffentlichungstag und Bekanntmachung des Hinweises auf die Patenterteilung: **14.04.2010**
(21) Anmeldenummer: 01931680.1
(22) Anmeldetag: 02.05.2001
(51) Int. Cl.: C12Q 1/04, G01N 1/30, C09B 67/00

(54) **PHENOLFREIE FÄRBELÖSUNG FÜR BAKTERIEN**
STAIN SOLUTION WHICH IS DEVOID OF PHENOL
SOLUTION COLORANTE EXEMPTE DE PHENOL

(30) Priorität: 18.05.2000 DE 10024086
(43) Veröffentlichungstag der Anmeldung: 12.02.2003
(73) Patentinhaber: Merck Patent GmbH, 64293 Darmstadt (DE)
(72) Erfinder: RAUH, Andreas, 64289 Darmstadt (DE); THOMAS, Evangelos, 64289 Darmstadt (DE); MEIER, Dorothee, 44801 Bochum (DE); GRABIS, Daniela, 68723 Schwetzingen (DE)
(86) Internationale Anmeldenummer: PCT/EP2001/004908
(87) Internationale Veröffentlichungsnummer: WO 2001/088177

(56) Entgegenhaltungen:
- EP-A- 0 286 255
- EP-A- 0 558 827
- WO-A-00/06765
- WO-A-01/49872
- CA-A- 2 179 368
- US-A- 4 665 024
- US-A- 4 816 244

## Beschreibung

Die Identifizierung von Bakterien spielt in vielen Bereichen, wie beispielsweise der klinischen Diagnostik, eine große Rolle. Häufig müssen Mykobakterien, zu denen unter anderem der Erreger von Tuberkulose zählt, oder auch gram-negative oder gram-positive Bakterien identifiziert werden.

Bakterien können aufgrund ihrer unterschiedlichen Zellwandzusammensetzung unterschieden werden. So lassen sich gram-positive von gram-negativen Bakterien unterscheiden und säurefeste (insbesondere Mykobakterien) von nicht säurefesten.

Säurefeste Mykobakterien werden zumeist mit der Ziehl-Neelsen Färbung nachgewiesen. Als Farbstoff dient dabei Fuchsin, das beispielsweise für eine Heißfärbung als Karbolfuchsinlösung oder für die Kaltfärbung als Tb-color Färbetest der Firma Merck KGaA, Deutschland, erhältlich ist. Für eine alternative Färbemethode zur Untersuchung mit dem Fluoreszenzmikroskop dient eine Auramin-Rhodamin-Lösung zur Anfärbung. Ein wichtiger Bestandteil aller Färbelösungen ist Phenol. Beispielsweise enthält eine übliche Fuchsin-Färbelösung ca. 5% Phenol. Ohne Phenol ist die Fuchsinfärbung von säurefesten Mykobakterien bisher nicht möglich.

Ebenso essenziell ist ein Phenolzusatz bislang für die Gram-Färbung. Diese Färbung dient der Unterscheidung zwischen gram-positiven und gram-negativen Bakterien. Bei dieser Färbung werden Anilinfarbstoffe (z.B. Kristallviolett) in der Bakterienzellwand bei nachfolgender lodeinwirkung zu einem Farbstoff-lod-Komplex gebunden. Gram-positive Bakterien binden den Komplex derart, daß er auch bei Entfärbung mit Alkohol/Aceton nicht wieder gelöst werden kann. Der Aufbau der Zellwand dieser Bakterien unterscheidet sich von dem der säurefesten Mykobakterien. Daher kann Phenol für diese Färbungen in etwas geringeren Mengen eingesetzt werden (ca. 0,4%). Ohne den Zusatz von Phenol ist die Färbung jedoch unvollständig und schwach.

Phenol ist toxisch (Giftklasse 2), ätzend und steht im Verdacht, kanzerogen zu sein. Bei der Herstellung und Anwendung von Phenol-haltigen Färbelösungen müssen daher große Sicherheitsvorkehrungen getroffen werden. Zudem besitzt Phenol einen unangenehmen Geruch, der zumeist noch beim Endprodukt vorhanden ist und leicht an Händen und Kleidern haftet.

Aufgabe der vorliegenden Erfindung war es daher, eine Färbelösung für Bakterien zu entwickeln, die kein Phenol enthält. Die Färbelösung sollte mit den herkömmlichen Phenol-haltigen Lösungen vergleichbare Färbeeigenschaften besitzen

Es wurde gefunden, daß in den Färbereagenzien Phenol durch 4-Methoxyphenol, 2-Phenylethanol, Benzylalkohol, 2-Butoxyethylacetat oder Cyclohexanol ersetzt werden kann. Die Lösungen zeigen Färbeergebnisse, die z.B. mit der Empfindlichkeit der konventionellen Ziehl-Neelsen Färbung vergleichbar sind. Alle erfindungsgemäß eingesetzten Phenolersatzstoffe sind wesentlich weniger toxisch als Phenol.

Gegenstand der vorliegenden Erfindung ist daher ein phenolfreies Färbereagenz für Bakterien, zumindest enthaltend einen oder mehrere Farbstoffe, ein Lösungsmittel und einen oder mehrere Stoffe ausgewählt aus 2-Butoxythylacetat, 2-Phenylethanol, Benzylalkohol, 4-Methoxyphenol und Cyclohexanol als Phenolersatzstoff.

In einer bevorzugten Ausführungsform ist der Farbstoff ein Anilinfarbstoff.

In einer bevorzugten Ausführungsform dient das Färbereagenz zur Ziehl-Neelsen Färbung.

In einer bevorzugten Ausführungsform kann das erfindungsgemäße Färbereagenz sowohl für die Kalt- als auch für die Heißfärbung nach Ziehl-Neelsen eingesetzt werden.

Besonders bevorzugt enthält das Färbereagenz 2-Phenylethanol und/oder Benzylalkohol.

Gegenstand der vorliegenden Erfindung ist auch die Verwendung der erfindungsgemäßen Färbelösungen zur Färbung von Bakterienpräparaten.

Die erfindungsgemäßen Färbelösungen sind zur Färbung von Bakterien auf Ausstrichpräparaten, zytologischen, histologischen, formalinfixierten und paraffineingebetteten Präparaten, im folgenden erfindungsgemäß Bakterienpräparate genannt, geeignet.

Die Färbung von Bakterien kann verschiedenen Zwecken dienen. Zum einen können Keime angefärbt werden, so daß sie sich vom Hintergrund abheben. Man kann feststellen, welche Form sie haben, d.h. ob sie z.B.
Stäbchen oder Kokken sind. Dies läßt sich durch jede unspezifische Färbung erreichen. Durch spezifische Färbungen, wie z.B. die Gram-Färbung, Ziehl-Neelsen-Färbung etc. läßt sich eine Vorabklassifizierung der Bakterien durchführen. Gram-positive Bakterien können von gram-negativen unterschieden werden, bzw. säurefeste von nicht säurefesten. Durch dieses Färbeergebnis läßt sich dann die genauere Spezies ableiten. Je nach ihrer Zusammensetzung sind die erfindungsgemäßen Färbelösungen für unspezifische oder spezifische Färbungen geeignet. Besonders bevorzugt werden die erfindungsgemäßen Färbelösungen zur Ziehl-Neelsen Färbung von säurefesten Mykobakterien eingesetzt.

Die erfindungsgemäßen Färbelösungen bestehen typischerweise aus einem oder mehreren Farbstoffen, einem oder mehreren Lösungsmitteln, einem oder mehreren Phenolersatzstoffen und eventuellen weiteren Bestandteilen, wie z.B. Konservierungsstoffen, Säuren, Basen oder Salzen. Als Farbstoffe werden diejenigen Farbstoffe verwendet, die auch in Phenol-haltigen Färbelösungen nach dem Stand der Technik enthalten sind. Bevorzugt sind dies Anilin-Farbstoffe, wie Methylenblau, Kristallviolett oder Fuchsin. Als Lösungsmittel dienen typischerweise Ethanol, Wasser (bevorzugt vollentsalzt) oder andere Alkohole wie z.B. Isopropanol oder Mischungen davon. Erfindungsgemäß ist das Phenol der herkömmlichen Färbelösungen durch einen Phenolersatzstoff, wie 2-Butoxyethylacetat, 2-Phenylethanol, Benzylalkohol, 4-Methoxyphenol, Cyclohexanol oder Mischungen davon ersetzt. Zusätzlich können die Färbelösungen weitere Bestandteile enthalten, wie sie auch für herkömmliche Färbelösungen bekannt sind. Der prozentuale Anteil aller Bestandteile der Färbelösungen entspricht typischerweise ungefähr dem bekannter Phenol-haltiger Färbelösungen, wobei erfindungsgemäß Phenol durch einen Phenolersatzstoff ersetzt ist.

Bei der Verwendung von Cyclohexanol muß beachtet werden, daß dieser Phenolersatzstoff nur für Färbelösungen geeignet ist, die nicht erhitzt werden (wie z.B. bei der Heißfärbung), da Cyclohexanol z.B. unter der offenen Flamme zu brennen beginnt.

Weiterhin ist zu beachten, daß bei einigen Färbelösungen zusätzlich keimhemmende Konservierungsstoffe zugesetzt werden müssen, da die keimabtötende Wirkung des Phenols entfällt.

Eine erfindungsgemäße Färbelösung für eine allgemeine Fuchsin-Färbung enthält typischerweise 5 bis 25 Volumen%, bevorzugt 10 bis 20 Volumen% einer gesättigten alkoholischen Fuchsinlösung in Wasser. Der Gehalt an Phenolersatzstoff beträgt zwischen 0,3 und 10, bevorzugt zwischen 0,5 und 5 Volumen%.

Zur Durchführung einer Ziehl-Neelsen Färbung wird typischerweise eine Färbelösung aus 5 bis 25 Volumen%, bevorzugt 10 bis 20 Volumen% einer gesättigten alkoholischen Fuchsinlösung in Ethanol/Wasser eingesetzt. Der Anteil an Phenolersatzstoff beträgt zwischen 1 und 8, bevorzugt zwischen 2 und 4 %. Die zur Entfärbung typischerweise verwendete herkömmliche HCl-Ethanollösung erwies sich bei der Verwendung erfindungsgemäßer Färbelösungen als zu stark. Daher wurde sie für viele Anwendungen 1:1 mit vollentsalztem Wasser verdünnt. Die Gegenfärbung erfolgt, entsprechend dem Stand der Technik, mit einer Malachitgrün-Lösung. Mit den erfindungsgemäßen Färbelösungen kann die Ziehl-Neeisen-Färbung typischerweise als Heiß- oder Kaltfärbung durchgeführt werden.

Die Auramin-Rhodamin-Färbung wird in der Regel mit einer Lösung aus Isopropanol, Glycerin, Wasser und den beiden Farbstoffen Rhodamin B und Auramin O durchgeführt. Eine Färbelösung, die nur Rhodamin B enthält, benötigt kein Phenol, um ihre Färbewirkung zu entfalten. Da in der Färbelösung jedoch zusätzlich Auramin O enthalten ist, wird Phenol, bzw. erfindungsgemäß ein Phenolersatzstoff, benötigt. Der Anteil an Phenolersatzstoff beträgt typischerweise zwischen 6 und 12 Volumen%, bevorzugt zwischen 8 und 9%.

Zur Durchführung einer Gram-Färbung wird typischerweise eine Färbelösung aus 5 bis 25 Volumen%, bevorzugt 10 bis 20 Volumen% einer gesättigten alkoholischen Anilinfarbstoff-Lösung (in der Regel Kristallviolett) in Ethanol/Wasser eingesetzt. Der Anteil an Phenolersatzstoff beträgt zwischen 0,15 und 6, bevorzugt zwischen 0,2 und 2 %. Die weiteren Schritte der Gram-Färbung erfolgen mit Reagenzien nach dem Stand der Technik.

Für alle Färbelösungen kann sich der Anteil des Phenolersatzstoffes je nach dem eingesetzten Ersatzstoff leicht verschieben. Beispielsweise enthält eine Gram-Färbelösung besonders bevorzugt 0,2 bis 0,5 % Benzylalkohol als Phenolersatzstoff, während bei der Verwendung von 2-Phenylethanol besonders bevorzugt 0,8 bis 1,5% eingesetzt werden.

Die Färbeverfahren mit den erfindungsgemäßen Phenol-freien Färbelösungen unterscheiden sich zumeist nicht von den Verfahren mit herkömmlichen Färbelösungen. Der Fachmann ist in der Lage, z.B. Einwirkzeiten, Waschzeiten oder die Konzentration von Lösungen wenn nötig entsprechend abzuändern. Verfahren zur Färbung von Mikroorganismen werden beispielsweise in Romeis, "Mikroskopische Technik", 17. Auflage (1989) beschrieben.

Zur Färbung von säurefesten Mykobakterien werden typischerweise folgende Verfahrensschritte durchgeführt:
a) die Bakterienpräparate werden mit einer erfindungsgemäßen Färbelösung bedeckt und inkubiert;
b) die Färbelösung wird mit einem Lösungsmittel, zumeist Wasser, abgespült;
c) es wird mit Entfärbelösung entfärbt;
d) die Bakterienpräparate werden mit einer Gegenfärbelösung inkubiert;
e) die Bakterienpräparate werden mit einem Lösungsmittel, zumeist Wasser, gespült, getrocknet und optional eingedeckt.

Bevorzugt wird in Schritt c) als Entfärbelösung eine mit Wasser verdünnte Salzsäure-Ethanol Lösung eingesetzt.

Als Gegenfärbelösung in Schritt d) wird bevorzugt eine Malachitgrün-Lösung, z.B. mit Malachitgrün als Oxalat, oder eine Methylenblau-Lösung eingesetzt.

Ein der Ziehl-Neelsen-Färbung entsprechendes Verfahren wird auch zur Färbung mit Auramin-Rhodamin durchgeführt.

Zur Gram-Färbung von Bakterien werden typischerweise folgende Verfahrensschritte durchgeführt:
a) die Bakterienpräparate werden mit einer erfindungsgemäßen Färbelösung bedeckt und inkubiert, danach kurz mit z.B. Wasser oder bevorzugt mit Lugols Lösung nachgewaschen;
b) die Bakterienpräparate werden mit einer Jod-haltigen Lösung (Lugols Lösung) nachbehandelt;
c) es wird mit Lösungsmittel, zumeist Wasser, nachgewaschen;
d) man entfärbt mit einer Entfärbelösung aus Ethanol/Aceton;
e) die Bakterienpräparate werden optional mit einer Gegenfärbelösung (z.B. Safraninlösung) inkubiert;
f) die Bakterienpräparate werden mit einem Lösungsmittel gespült, getrocknet und optional eingedeckt.

Bevorzugt enthält die Färbelösung in Schritt a) als Farbstoff Kristallviolett.

Das Eindecken aller Bakterienpräparate kann z.B. mit Entellan^{®} der Firma Merck KGaA erfolgen.

Die Färbung von Bakterienpräparaten kann in der Regel durch die Konzentration der Färbelösungen beeinflußt werden. Im Allgemeinen erhält man bessere Ergebnisse, wenn mit einer verdünnten Lösung über längere Zeit inkubiert wird. Bei der Ziehl-Neelsen Färbung kann zusätzlich eine Intensivierung der Färbung durch eine Temperaturerhöhung während der Färbung, dem sogenannten Heißfärben, erzielt werden. Die klassische Ziehl-Neelsen-Färbung wird daher als Heißfärbung durchgeführt. Die erfindungsgemäßen Reagenzien für die Ziehl-Neelsen-Färbung können bevorzugt sowohl für die klassische Heißfärbung als auch für eine Kaltfärbung eingesetzt werden.

Somit bieten die erfindungsgemäßen Färbelösungen die Möglichkeit, bei gleicher Färbequalität die Verwendung des toxischen Phenols zu vermeiden. Die erfindungsgemäßen Färbelösungen sind ebenso einfach anzuwenden wie die aus dem Stand der Technik bekannten Lösungen.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung DE 100 24 086, eingereicht am 18.05.2000, ist durch Bezugnahme in diese Anmeldung eingeführt.

### Beispiel

### Ziehl-Neelsen Färbung

Es wurden Bakterienausstriche mit *Mycobacterium phlei, Mykobakterium fortuitum und Escherichia coli* (als Kontrolle) angefärbt. Ferner wurden histologische, formalinfixierte und paraffineingebettete Präparate mit *Mykobakterium tuberculosis* eingesetzt. Die Ausstriche wurden jeweils von Keimen aus einer Kultur angefertigt.
Es wurden folgende Reagenzien eingesetzt:

**Färbelösung (pro Liter):**

| | |
|---|---|
| 6,4 g | Fuchsin (CI 42510, Merck KGaA) |
| 130 ml | Ethanol (absolut) |
| 846 ml | Wasser (vollentsalzt) |
| 24 ml | 2-Phenylethanol gelöst in 40 ml Wasser |

Entfärbelösung: HCl (0,75%) / Ethanol (Salzsäure-Alkohol für die Mikroskopie, Merck KGaA). Diese Lösung wird zum Gebrauch 1:1 mit Wasser verdünnt.
Gegenfärbelösung: Malachitgrün-Oxalat (CI 42000, Tb-color Lösung, Merck KGaA)
Eindeckmittel: Entellan^{®} (Merck KGaA)

Die Bakterienpräparate werden mit der Färbelösung bedeckt. Nach 5 min Einwirkdauer werden sie mit Leitungswasser kurz abgespült. Nach kurzem Abtropfen erfolgt die Entfärbung mit der Entfärbelösung. Da die herkömmliche Entfärbelösung zu aggressiv entfärbt, wurde diese 1:1 mit Wasser verdünnt. Die Entfärbung ist abgeschlossen, wenn sich keine Farbwolken mehr aus dem Präparat lösen (nach ca. 5 Sekunden). Danach wird sofort mit Leitungswasser gespült und die Präparate weitgehend abgetrocknet. Anschließend wird mit Malachitgrün-Lösung gegengefärbt (Einwirkdauer 1-2 min). Die Präparate werden wieder mit Leitungswasser gespült, danach getrocknet und mit Deckglas und Entellan^{®} eingedeckt.

Die fertig gefärbten und eingedeckten Präparate können unter einem Lichtmikroskop untersucht werden. Die säurefesten Mykobakterien sind leuchtend rot gefärbt, während die *E. coli* hellgrün sind.

Als Bewertungskriterien für die Qualität der Färbung gilt:
a) die Intensität/ der Kontrast der gefärbten Keime
b) der prozentuale Anteil der gefärbten Keime

Die erfindungsgemäße Färbelösung zeigt sowohl bei der Heiß- wie auch bei der Kaltfärbung eine Färbequalität, die der Färbequalität phenolhaltiger Färbelösungen entspricht.

## Patentansprüche

1. Phenolfreie Färbelösung für Bakterien, zumindest enthaltend
- einen oder mehrere Farbstoffe ausgewählt aus der Gruppe der Anilinfarbstoffe, Fuchsin und einer Kombination aus Rhodamin B und Awamin O
- ein Lösungsmittel
- 2-Butoxyethylacetat, 2-Phenylethanol, Benzylalkohol, 4-Methoxyphenol, Cyclohexanol oder Mischungen davon als Phenolersatzstoff.

2. Phenolfreie Färbelösung für Bakterien nach Anspruch 1, zumindest enthaltend eine der folgenden Kombinationen:
a) 5 bis 25 Vol% einer gesättigten alkoholischen Fuchsinlösung in Wasser und 0,3 bis 10 Vol% 2-Butoxyethylacetat, 2-Phenylethanol, Benzylalkohol, 4-Methoxyphenol, Cyclohexanol oder Mischungen davon
b) Rhodamin B, Auramin O und 6 bis 12 Vol% 2-Butoxyethylacetat, 2-Phenylethanol, Benzylalkohol, 4-Methoxyphenol, Cyclohexanol oder Mischungen davon
c) 5 bis 25 Vol% einer gesättigten alkoholischen Anilinfarbstoff-Lösung in Ethanol/Wasser und 0,15 bis 6 Vol% 2-Butoxyethylacetat, 2-Phenylethanol, Benzylalkohol, 4-Methoxyphenol, Cyclohexanol oder Mischungen davon.

3. Phenolfreie Färbelösung für Bakterien nach Anspruch 1 oder 2, **dadurch gekennzeichnet, dass** als Anilinfarbstoff Kristallviolett eingesetzt wird.

4. Phenolfreie Färbelösung für Bakterien nach einem oder mehreren der Ansprüche 1 bis 3, **dadurch gekennzeichnet, dass** die Färbelösung 2-Phenylethanol und/oder Benzylalkohol enthält.

5. Verwendung einer Färbelösung nach einem oder mehreren der Ansprüche 1 bis 4 zur Färbung von Bakterienpräparaten.

6. Verwendung nach Anspruch 5, **dadurch gekennzeichnet, dass** eine Ziehl-Neelsen Färbung, eine Fuchsin-Färbung, eine Auramin-Rhodamin-Färbung oder eine Gram-Färbung durchgeführt wird.

## Claims

1. Phenol-free staining solution for bacteria, at least comprising
- one or more stains selected from the group of the aniline stains, fuchsin and a combination of rhodamine B and auramine O
- a solvent
- 2-butoxyethyl acetate, 2-phenylethanol, benzyl alcohol, 4-methoxyphenol, cyclohexanol or mixtures thereof as phenol substitute.

2. Phenol-free staining solution for bacteria according to Claim 1, at least comprising one of the following combinations:
a) 5 to 25% by vol. of a saturated alcoholic fuchsin solution in water and 0.3 to 10% by vol. of 2-butoxyethyl acetate, 2-phenylethanol, benzyl alcohol, 4-methoxyphenol, cyclohexanol or mixtures thereof
b) rhodamine B, auramine O and 6 to 12% by vol. of 2-butoxyethyl acetate, 2-phenylethanol, benzyl alcohol, 4-methoxyphenol, cyclohexanol or mixtures thereof
c) 5 to 25% by vol. of a saturated alcoholic aniline stain solution in ethanol/ water and 0.15 to 6% by vol. of 2-butoxyethyl acetate, 2-phenylethanol, benzyl alcohol, 4-methoxyphenol, cyclohexanol or mixtures thereof.

3. Phenol-free staining solution for bacteria according to Claim 1 or 2, **characterised in that** the aniline stain employed is Crystal Violet.

4. Phenol-free staining solution for bacteria according to one or more of Claims 1 to 3, **characterised in that** the staining solution comprises 2-phenylethanol and/or benzyl alcohol.

5. Use of a staining solution according to one or more of Claims 1 to 4 for staining bacterial preparations.

6. Use according to Claim 5, **characterised in that** a Ziehl-Neelsen stain, a fuchsin stain, an auramine-rhodamine stain or a Gram stain is carried out.

## Revendications

1. Solution colorante sans phénol pour les bactéries, comprenant au moins
- un ou plusieurs colorants choisis parmi le groupe constitué par les colorants à l'aniline, la fuchsine et une association de rhodamine B et d'auramine O
- un solvant
- de l'acétate de 2-butoxyéthyle, du 2-phényléthanol, de l'alcool benzylique, du 4-méthoxyphénol, du cyclohexanol ou des mélanges de ceux-ci comme substituts du phénol.

2. Solution colorante sans phénol pour les bactéries selon la revendication 1, comprenant au moins l'une des combinaisons suivantes :
a) de 5 à 25% en volume d'une solution de fuchsine alcoolique saturée dans l'eau et de 0,3 à 10% en volume d'acétate de 2-butoxyéthyle, de 2-phényléthanol, d'alcool benzylique, de 4-méthoxyphénol, de cyclohexanol ou de mélanges de ceux-ci
b) de la rhodamine B, de l'auramine O et de 6 à 12% en volume d'acétate de 2-butoxyéthyle, de 2-phényléthanol, d'alcool benzylique, de 4-méthoxyphénol, de cyclohexanol ou de mélanges de ceux-ci
c) de 5 à 25% en volume d'une solution de colorant à l'aniline alcoolique saturée dans l'éthanol/eau et de 0,15 à 6% en volume d'acétate de 2-butoxyéthyle, de 2-phényléthanol, d'alcool benzylique, de 4-méthoxyphénol, de cyclohexanol ou de mélanges de ceux-ci.

3. Solution colorante sans phénol pour les bactéries selon la revendication 1 ou 2, **caractérisée en ce que** le colorant à l'aniline utilisé est le Violet Cristallisé.

4. Solution colorante sans phénol pour les bactéries selon l'une ou plusieurs des revendications 1 à 3, **caractérisée en ce que** la solution colorante comprend du 2-phényléthanol et/ou de l'alcool benzylique.

5. Utilisation d'une solution colorante selon l'une ou plusieurs des revendications 1 à 4 pour la coloration de préparations bactériennes.

6. Utilisation selon la revendication 5, **caractérisée en ce que** l'on effectue une coloration de Ziehl-Neelsen, une coloration à la fuchsine, une coloration à l'auramine-rhodamine ou une coloration de Gram.
